# EUROPEAN PATENT SPECIFICATION

(11) **EP 1 149 206 B1**
(45) Date of publication and mention of the grant of the patent: **07.06.2006**
(21) Application number: 00901745.0
(22) Date of filing: 02.02.2000
(51) Int. Cl.: E02D 3/11, B09C 1/00

(54) **Method and apparatus for contitioning a substrate mass**
Verfahren und Einrichtung zur Konditionierung eines Substrats
Méthode et dispositif pour conditionner un substrat

(30) Priority: 02.02.1999 GB 9902146
(43) Date of publication of application: 31.10.2001
(73) Proprietor: NEWCASTLE UNIVERSITY VENTURES LIMITED, Newcastle upon Tyne NE1 1XX (GB)
(72) Inventor: JONES, Colin John Francis Philip, Newcastle Upon Tyne NE1 7RU (GB); CHRISTENSEN, Paul Andrew, University of Newcastle, Newcastle Upon Tyne, NE1 7RU (GB); SCOTT, Keith University of Newcastle, Newcastle Upon Tyne, NE1 7RU (GB)
(74) Representative: Wilson, Peter
(86) International application number: PCT/GB2000/000282
(87) International publication number: WO 2000/046450

(56) References cited:
- EP-A- 0 504 551
- EP-A- 0 870 875
- GB-A- 2 301 311
- US-A- 5 074 986
- US-A- 5 435 895
- US-A- 5 476 992
- US-A- 5 676 819
- PATENT ABSTRACTS OF JAPAN vol. 1995, no. 04, 31 May 1995 (1995-05-31) & JP 07 018654 A (SHIMIZU CORP;OTHERS: 03), 20 January 1995 (1995-01-20)
- PATENT ABSTRACTS OF JAPAN vol. 1998, no. 09, 31 July 1998 (1998-07-31) & JP 10 110426 A (OHBAYASHI CORP;TOAGOSEI CO LTD), 28 April 1998 (1998-04-28)
- PATENT ABSTRACTS OF JAPAN vol. 014, no. 570 (M-1060), 18 December 1990 (1990-12-18) & JP 02 243816 A (OHBAYASHI CORP), 27 September 1990 (1990-09-27)

## Description

The present invention relates to a method for conditioning a substrate using an electrokinetic geosynthetic structure, the use of the electrokinetic geosynthetic structure in the method, novel arrangements of electrokinetic geosynthetic structures and conditioned substrates obtained thereby. More specifically the invention relates to a method for conditioning a substrate as defined for moisture or volume control, soil conditioning for agriculture or other purposes, bacterial growth in soils, retrieval and burial of objects in soil and the like, and the corresponding use of the electrokinetic geosynthetic structure, arrangements of electrokinetic geosynthetic structures suited for the purpose of conditioned substrates obtained thereby.

The use of geosynthetic materials for reinforcement or drainage purposes is established practice. The materials used are generally non-metallic and can take any form, the most common being strips, sheets and grids. They can be manufactured by any suitable method, such as knitting, weaving or needle punching, extrusion or the like. Geosynthetics, also known as and sometimes referred to as geotextiles, are typically referred to by their principle function for any particular application and since there are essentially five principle functions there are five types of geosynthetics. These are filtration, separation, membrane, drainage and in plane flow, and reinforcement geosynthetics.

Geosynthetics may also provide any combination of the above functions and the present invention can be used for all of these functions, for example in drainage and reinforcement of substrate material in the construction industry, and thus has numerous industrial applications.

Electrokinetic geosynthetics (hereinafter referred to as EKGs) are electrically conductive geosynthetic or geotextiles. EKGs have an enhanced performance over non-conductive geosynthetics. EKGs, in addition to providing filtration, drainage, separation, acting as a membrane and reinforcement can be enhanced by electrokinetic techniques for the transport of water and chemical species within fine grained low permeability substrates, which are otherwise difficult or impractical to deal with. In addition to conductivity, transivity, absorption, adsorption, wicking, hydrophilic and hydrophobic tendencies may also be incorporated in the geosynthetic.

The ability of electrokinetic phenomena to move water, charged particles and free ions through fine-grained low permeability substrate is established. There are five principle electrokinetic phenomena: streaming potential, migration/sedimentation potential, electroosmosis/electromigration, ion migration and electrophoresis. The first two of these phenomena are concerned with the generation of electrical potential due to the movement of charges and charged particles respectively. The remaining three are concerned with the transport mechanisms developed upon application of a potential difference across a substrate mass.

In practice a potential difference is applied across a substrate mass using EKGs or conventional electrodes. Cations are attracted to the cathode and anions to the anode. The three transport mechanisms are explained below.

In electroosmosis, as the ions migrate they carry their hydration water with them and exert a viscous drag (frictional force) on the water around them. Hence, there is a flow of water to both the anode and the cathode. In order to maintain a charge neutrality however, there are more cations than anions in the pore fluid of a substrate predominantly comprising negatively charged particles. Therefore there is a net flow of water to the cathode. Substrates of positively charged particles may also be encountered in which case an excess of anions exists for the maintenance of charge neutrality, the net flow of water being to the anode. Electroosmotic flow depends upon the applied voltage gradient and the electroosmotic permeability of the substrate.

The application of a potential difference across a substrate mass causes migration of the free ions and ion complexes, which are present within the pore fluid, to the appropriate electrode. The average mobility of ions in substrates may be of the order of 5 x 10⁻⁸m²/Vs, which is an order of magnitude greater than the electroosmotic permeability. Hence, anions can usually overcome the electroosmotic flow and migrate towards the anode; this movement being known as electromigration or ion migration.

When a DC electric field is applied across a particulate suspension, for example a suspension of colloids, clay particles, organics and the like, charged particles in suspension are electrostatically attracted to one of the electrodes and are repelled from the other. Positively charged particles are attracted to the cathode and negatively charged particles are attracted to the anode. Most colloids are negatively charged and are therefore attracted to the anode. This electrophoresis has found applications in the densification of sludges and mine tailings.

EKGs can take the form of single materials, which are electrically conductive, or composite materials, in which at least one element is electrically conductive, such that the EKG can function as an electrode. They can be of the same basic form as commercially available filter, drainage, separator and reinforcement materials, but offer sufficient electrical conduction to allow the application of electrokinetic techniques.

There are a number of materials which can be used to produce electrically conductive geosynthetics, such as carbon fibre materials, conductive composites, polymers and metals in the form of fibres, strips, wires, elements or stitching.

GB 2 301 311 relates to improvements in geosynthetics and introduces EKGs. This prior art document discloses EKG structures including layers of drainage and reinforcement geosynthetics stitched together with conductive fibres. The reinforcement and/or drainage material may also be conductive.

EP870875 describes a geosynthetic vertical drain for draining fluid from ground soil.

US5074986 describes a method of removing contaminant material from a soil site using porous electrode structures to cause a flow of an applied perging liquid.

Primarily EKGs are nevertheless associated with removal of contaminants, water and the like from a substrate mass. We have now surprisingly found that by a further adaptation of EKG structures their range of possible applications can be still further extended to considerable advantage.

Accordingly in a first aspect of the invention, as defined by appended claim 1, there is provided a method for conditioning a substrate mass.

In a second aspect of the invention, as defined by appended claim 18, there is provided a substrate mass conditioning apparatus.

The geosynthetic may itself be conducting and comprise an electrode or may be located in the vicinity of a conducting element. Reference herein to EKG are to both configurations.

Optionally the method of the invention as hereinbefore defined comprises additionally providing an evacuation system associated with one of the elements for evacuation of at least one conditioning material or of a waste material or by product from the substrate mass, an evacuated conditioning material may be the same as or different to that supplied to the substrate mass. Reference herein to an evacuation system is to any system achieving aided or unaided complete or partial removal of conditioning material or waste material or by-product and the like. Aided removal may use techniques such as eduction and the like.

In each case, the conducting element may be associated with or near a portion of the EKG, and this may be proximal or remote, having regard to the supply system, and is preferably proximal. Without being limited to this theory it is thought that this improves electrical continuity.

Preferably where the method of the invention is for both supply and removal of materials, this is carried out sequentially although it may be simultaneous. In the case of sequential supply and removal the supply and removal systems may be the same or different. Preferably the supply and removal systems comprise hydraulic and electrical continuity with the EKG and respective reservoirs. This is in the case of supply and removal of similarly charged material with reversal of electrode polarity, or materials which are oppositely charged without the need for reversing polarity of electrodes.

Reference herein to substrate is to soil, loam, earth, sod, clay, weak rock and other ground material including mixed ground material and waste material or a mix of ground material and any other material, sewerage, sludge, or other substance or mixture of substances to be retreated, artificial ground material including the aforementioned substrates and other drainage, stabilising and like materials such as gravel, stones, supply conduits, cables and the like, buried structures and the like.

Reference herein to conditioning is to any treatment which improves the quality of performance of a substrate mass for reason of its intended purpose or for any incidental purpose.

The conditioning material to be supplied and optionally also removed is either fluid or is solid which is capable of being entrained by, suspended in or leached into fluid or otherwise transported as charged particles between the elements under the influence of a potential difference.

Conditioning material may be any liquid or solid material which has a net charge enabling transport by any of the above defined electrokinetic mechanisms and which has a beneficial influence on any desired substrate mass as hereinbefore defined. Particularly envisaged as fluid conditioning material are water and aqueous solutions, salts, nutrients such as nitrogen, phosphorus and trace metals, supplementary carbon source such as acetates, supplementary oxygen sources, terminal electron acceptors such as nitrate, water retention materials such as natural or synthetic hygroscopic materials, thickening materials such as thixotropes, biomass such as specialised bacterial strains, pH regulators, temperature regulators, minerals, reducing agents and oxidants for example for decomposing organics such as petrochemicals and solvents, absorbents such as activated carbon and inorganic porous materials including naturally occurring or synthetic alumino-silicates or zeolites (preferably activated zeolites), metal particles or coated metal particles such as iron or iron filings which may act as catalyst materials, non metallic catalyst materials grout or lime and mixtures thereof.

Conditioning is therefore by means of the EKG structure which comprises a supply system for introducing, dispersing, sorbing, adsorbing, absorbing conditioning materials as hereinbefore defined.

Flow of conditioning material can be controlled in both horizontal and vertical planes. Supply and conditioning may be therefore carried out harnessing or countering the effects of gravity or natural flow in a given substrate mass as desired, for example to enhance the dispersion of conditioning material, to enhance the conditioning by counterflow of conditioning material such as bacteria against the general hydraulic flow within the substrate mass, or to prevent natural flow to an adjacent substrate mass, for example preventing agricultural or industrial run off into aquifers and natural water supplies.

A supply system as hereinbefore defined is any means for supplying conditioning material as hereinbefore defined to an electrode as hereinbefore defined. Preferably a supply system is a permanent supply reservoir in direct hydraulic contact with an electrode, a path or network of paths for hydraulic contact to a permanent or temporary supply reservoir or an aperture for directly or indirectly connecting a temporary reservoir in hydraulic contact with an electrode as hereinbefore defined.

An evacuation system as hereinbefore defined may be any system as hereinbefore defined for a supply system and additionally may comprise aids such as eductors and the like.

A reservoir as hereinbefore defined may be remote from or local to a substrate mass to be conditioned as hereinbefore defined, and interfaced therewith by a supply and optional evacuation system as hereinbefore defined. A reservoir local to a substrate mass may be comprised within the substrate mass, or adjacent thereto and comprised above or within adjacent substrate, structures, ground, seabed and the like.

A reservoir as hereinbefore defined may be permanent or temporary, natural or artificial. For example a natural reservoir of water may comprise a different substrate mass or different region of the same substrate mass having an available water supply or may be created by preparing a depression in the substrate surface adjacent to one of the electrodes, or building a small soil boundary or embankment to make a pond for collection of water.

An artificial reservoir as hereinbefore defined may be any form of overground or underground permanent or temporary mobile or otherwise container, tank, tanker, cylinder transporter or the like, optionally comprising means to pump the conditioning material to and from the electrode to be supplied or evacuated.

An artificial reservoir is preferably used for supply or removal of materials which it is desired to confine to the mass to be conditioned without wastage or leakage, for example materials which may be potentially toxic, which must be supplied in highly concentrated form and may suffer dilution if not contained, materials which may be rendered inactive if not contained, materials which are not natural to the locus and the like.

A temporary artificial reservoir may be connected to a supply system as hereinbefore defined. A temporary reservoir is preferably a reservoir which also serves as a container for transport of conditioning material and is simply linked up to a supply system as hereinbefore defined at the time of supply, or is an overground reservoir for conditioning material for a substrate mass which it is desired should not be visible when not actively supplying material, or is any reservoir which is to be used for active supply only for a specific season or period and is redundant in other seasons or periods, or is a reservoir for supply of a material to a number of substrate masses and is simply transferred between locations of different substrate masses as required or the like.

The method of the invention is made possible with the use of geosynthetic material that has at least one conducting element by means of the ability to reverse the polarity of the element to work for supply of any materials in any substrates and optionally additionally for evacuation. It is of particular advantage that this may be achieved without substantial deterioration of the elements which might otherwise have an adverse effect in the conditioning of the substrate mass associated therewith.

One or more other electrodes may optionally be conventional metallic non EKG electrodes, having the advantage of cost reduction in particular where a number of other electrodes are required to condition a large substrate mass area.

Conditioning envisaged according to the present invention may therefore include, but is not limited to, volume regulation of substrate mass, for example according to seasonal or regional moisture variation (drought or flooding) or indeed the localisation, or stabilising or moisture control thereof, for use in construction, foundation laying, road laying, pH regulation, nutrient introduction, environmental clean up, bioremediation, removal of organic or inorganic pollutants, retrieval or burying of subterranean or submarine structures and the like.

Conditioning may be performed for a finite period on a given substrate mass to provide a useable or disposable end product or may be performed periodially on a given substrate mass to regulate the condition thereof throughout the operational lifetime of the substrate mass.

Conditioning may be performed *in situ* or *ex situ*, choice of conditioning location suitably being according to convenience, safety etc. Conditioing may be carried out batchwise or continuously, this being particularly relevant in the case of conditioning for a finite period to provide a useable or disposable product, for example in clean up or the like.

The present invention derives from the finding that a wide variety of substrate masses as hereinbefore defined may be conditioned as hereinbefore defined by addition of conditioning materials as hereinbefore defined and optionally additionally removal of conditioning materials as hereinbefore defined or of other waste or by product materials. This action of supply can moreover be ideally performed with use of EKGs as hereinbefore defined with a number of associated advantages such as simplicity of construction and operation, minimum disruption to the locus or environment of operation, long term effect in usefulness and resilience to degradation. Moreover according to the further embodiment of the method of the present invention it is possible to supply and evacuate conditioning materials which may be the same or oppositely charged without the need for reversing polarity of the electrodes.

In one preferred embodiment the method of the invention is a method for conditioning soil for burial or retrieval of subterraneous and/or submarine structures such as pipe lines, cables, sewerage systems such as septic tanks and the like. The method provides the advantage that the object to be buried may be buried in a stabilised substrate mass such as soil with minimal subsequent subsidence or settlement and differential settlement which may lead to the malfunctioning or damage of the buried structure or disintegration trawling or other damage to the soil allowing floation and retrieval of the buried object.

Similar advantages are apparent for retrieval of buried structures whereby the retrieval may be carried out with minimal damage or disturbance to the object itself or further neighbouring structures or structure components.

In this method at least two conducting elements are located in the substrate mass to be excavated, with the portion to be excavated therebetween. At least one of the conducting elements is associated as part of a geosynthetic material as hereinbefore defined. Another element may also be associated with a geosynthetic, may be a conventional electrode or may comprise the structure to be buried or retrieved, or a part thereof, where this is of conducting material. A fluid supply system is associated with the geosynthetic material, preferably in the form of a reservoir with hydraulic continuity or wicking contact. An electrical potential difference is applied across the two conducting elements, the geosynthetic element associated with the supply system being the anode and the other electrode being the cathode for a suitable period to pump fluid which may be any softening fluid such as water into the substrate mass to cause softening thereof. A subterranean and/or submarine structure may be readily retrieved either by natural displacement by the softened substrate mass allowing it to rise to the surface or by applying buoyancy or attaching a retrieval line. An object to be buried may simply be sunk into the softened substrate mass and positioned. Thereafter the softened substrate mass may be returned to its former state or be formed into an improved state by reversing the potential difference between the electrodes causing the softening fluid to flow towards the geosynthetic material and evacuated via the supply system or reservoir which now serves as an evacuation system or reservoir.

In a further embodiment the method of the invention is for conditioning substrate masses to serve as foundations for buildings, roads, and other structures. In this case the substrate masses typically suffer from seasonal moisture variation for example in drought/flood regions, regional moisture variation across the mass itself and the like. Conditioning serves to regulate the strength and volume of the substrate mass. Using a similar method to that previously described the method may be carried out for supply or evacuation of water or aqueous fluid according to the prevailing conditions within or throughout the substrate mass. Moisture may be evacuated from one region and supplied to a further region with the substrate mass by use of a system of elements as herein before defined or may be supplied or evacuated from the entire substrate mass in response to destabilising lack of moisture or excess of moisture. This is of particular advantage for example in substrates with a high clay content or having a content of non-cohesive materials which may be adversely destabilised by lack of moisture.

In a further embodiment the method is for conditioning artificial or natural substrate masses serving for activities requiring regulated uniform moisture content and is a method for conditioning by regulation of optimum water content according to the method as described in the first and second embodiments. According to this method of the invention substrate masses in the form of sports or leisure pitches, fields and the like may be maintained at high condition to avoid excessive dehydration leading to fracture of the surface or excessive hydration leading to over saturation. This is of particular advantage in maintaining quality of expensive sports pitches both throughout the season and in the course of play, leisure sites such as activity parks, fairgrounds, outdoor events such as concerts, camp sites and the like, and the latter which may be on inclined or undulating slopes with natural water supplies worsening the existing problems of rainfall, drought and passage of vehicles and humans.

In a further embodiment the method of the invention is for conditioning substrate mass in the form of soil for agricultural purpose. In this case the method is as hereinbefore defined but the conditioning material supplied is a soil nutrient for example including salts for soil improvement and the material to be evacuated is soil contaminants, by-products or excess water.

In a further embodiment the method of the invention is for conditioning a substrate mass to serve as a decontaminating mass for decontaminating material to be introduced therein or material naturally or accidentally occurring therein, using the methods as defined above. In this case the conditioning material to be introduced is a decontaminant or contaminant absorbant such as bacteria, activated carbon, inorganic porous material such as naturally occurring or synthetic aluminosilicates for example zeolites and the like. Introduction of bacteria in bioremediation may be accompanied by introduction of bacteria nutrient mixtures or "cocktails". Decontamination may be carried out *ex situ* in which case contaminant material and decontaminant may be introduced into a substrate mass using the method of the invention. Optionally material to be evacuated may be by product, waste, contaminant or excess water.

The method of the invention is particularly suited for bioremediation, whereby bacteria are transported through the substrate mass and are present in any given region thereof for a finite period, avoiding more than a transient exposure to inhibitory concentrations of contaminant. This enhances rate of remediation and renders *in situ* bioremediation highly effective and practical as an alternative to *ex situ* treatment.

The method of the invention for decontamination is particularly useful in environmental clean up of industrial sites. Clean up of high concentrations of halogenated organics and the like preferably employs an EKG as hereinbefore defined comprising an iron, iron/carbon or other modified iron composite high surface area electrode, which has been found to be highly effective in transferring electrons to adsorbed organics.

In a further embodiment the method of the invention is for conditioning substrate masses such as anchored structures or unstable soil structures by enhancing the cohesion thereof. In this the conditioning fluid to be introduced is a cohesion inducing material such as lime, grout and the like or a solid mass thereof which is leached according to the method into the soil together with supply of water as conditioning fluid. The optional conditioning fluid to be evacuated comprises any contaminant, by-products, waste or excess water.

In a further embodiment the method of the invention is for conditioning subterranean structures which are liable to bio fouling. In this case the condition material to be introduced comprises electrolyte which serves to conduct a current between the elements and thereby kill undesirable bacteria which accumulates, for example in land drains and the like, and the conditioning material to be evacuated comprises water and contaminants and products in the form of decomposed natural matter.

In a further aspect of the invention, there is provided an arrangement for conditioning a substrate mass as hereinbefore defined comprising an electrokinetic geosynthetic structure as hereinbefore defined, a further conducting element as hereinbefore defined together with a supply system and optional evacuation system as hereinbefore defined and means for applying a potential difference between the elements.

The EKG in the arrangement of the present invention may be any as described in GB 2 301 311, also published as WO-A-9521965.

The EKG may be in the form of a solid body having a central core which may serve as supply system or removal system for one or both conditioning materials and/or may serve as supply or removal reservoirs in the case of the supply and removal conditioning materials being the same.

The conducting element or elements in an EKG structure as hereinbefore defined may be provided by any known conducting material. For example, the conducting element may be pure or composite metallic such as metals or metal powders dispersed in suitable solid carriers (in particular iron or mixtures thereof), or conducting non-metallic, such as inorganic oxides, polymers or composites thereof. Preferred materials include iron, platinum and the like. In an EKG structure as hereinbefore defined the at least one conducting element preferably comprises conducting non-metallic material such as oxides, polymers, carbon and the like, more preferably selected from oxides of metals of groups II and the transition elements of the Periodic Table of the Elements, for example Mg, Ti, Zr, Fe, Ni, Pd, Pt, Cu, Zn, most preferably sub oxides derived from titanium dioxide, commercially available as Ebonex(TM) (Atraverda). Such material is, by definition, less prone to corrosion than metallic material.

Any shape of the conducting element may be provided which creates a conducting EKG structure. For example, the conducting element may be in the form of a filament, fibre, strand, wire, layer of any shape or other solid or hollow form or otherwise, for example, adapted to conform to the structure or environment. Alternatively, conducting material may be dispersed throughout the sheath and/or core as hereinbefore defined to form the at least one conducting element.

Where a plurality of conducting elements is provided, these may be positioned in an arrangement within the EKG structure or within a part of the EKG structure. For example the conducting elements may be randomly, regularly or irregularly spaced. In one preferred embodiment the conducting elements are in the form of one or more lines of spaced elongate members and are preferably parallel.

The EKG structure may comprise a reinforcing element as hereinbefore defined in any advantageous form and orientation to reinforce the EKG as hereinbefore defined. For example, the at least one reinforcing element may be distributed throughout the EKG, in sheet form, or in the form of one or more elongate elements. In one preferred embodiment, the reinforcing element is at least one high strength elongate element running parallel to the longitudinal axis of the EKG structure.

In a further aspect of the invention there is provided the use of the EKG structure as hereinbefore defined as an electrode. In a preferred embodiment the EKG structure as hereinbefore defined is adapted to be used as both a cathode and an anode. This allows reversal of applied potential difference *in situ.*

The geosynthetic may be manufactured by any conventional method and may be rendered electrically conductive, for example by heat bonding, gluing, needle punching, extrusion, extraction, casting, moulding, weaving, knitting or any combination of these methods. The chosen method is dependent on the required properties of the geosynthetic.

Preferably the material forming the geosynthetic is conductive; this may be achieved in a number of ways. For example, in one preferred embodiment the geosynthetic comprises conductive material and preferably acts as the conducting element.

In another preferred embodiment the geosynthetic comprises a non-conductive material with conducting material running through it at least partially on the outer surface of the geosynthetic.

An electric field for use with the EKG, electrode or in the methods of the invention may be uniform, stepped or otherwise profiled with time or throughout the electrode or EKG. Preferably the field is uniform throughout the structure and varies with time, for example is stepped up from an initial threshold field.

The methods may be used with any number of electrodes. Where more than two electrodes are provided, individual electrodes may be connected to electrical supplies and the electrical potential applied across each anode/cathode pair. Such connection is known as mono polar connection. One disadvantage of mono polar connection is the necessity for high current, low voltage supplies that are relatively expensive.

Alternatively and preferably, the outer two electrodes of an array of electrodes may be connected to an electrical supply. In this way the intermediate electrodes act as induced electrodes and the voltage distributes itself between the outer electrode pair. This is known as bi polar connection and simplifies electrical connection as well as requiring a lower current and higher voltage than mono-polar connections. The reduced current requirements will lead to lower current densities, which are desirable for efficient electro osmosis.

EKGs may be used in combination, for example in an array or grid and thereby be used as a plurality of cathodes and/or anodes, or if in contact with each other, in combination as a single cathode and/or anode. Such an array may be, for example, in the form of interwoven EKG structures making up a matrix or cloth. In another preferred embodiment the EKG structure as hereinbefore defined is in the form of a continuous, elongate tube, tape or rope. Such EKG structures are easy to transport and position within substrates.

In a further aspect of the invention there is provided the use of an EKG in an arrangement or method as hereinbefore defined.

In a further aspect of the invention there is provided a substrate mass as hereinbefore defined conditioned with use of the method for an apparatus as hereinbefore defined. The effects of conditioning may be sustained for the duration of a single conditioning treatment or may be of prolonged effect. The method and arrangement of the invention are particularly suited for use in conditioning substrate masses which are prone to deterioration by exhaustion of conditioning material within the substrate mass due to consumption by the substrate mass itself or due to the effects of prevailing environmental conditions.

The invention is now illustrated in non-limiting manner with reference to the following figures wherein:
Figure 1 is a vertical section through a substrate mass located between an EKG associated with supply and evacuation reservoirs, and an electrode;
Figure 2 is a horizontal section through a substrate mass containing a plurality of electrodes associated with supply reservoirs and terminating at an EKG with evacuation reservoir;
Figure 3 is a vertical section through an EKG "geobag" containing substrate mass and associated with a supply reservoir at its core and evacuation reservoirs at its perimeter;
Figure 4 is a vertical section of an alternative arrangement to Figure 3;
Figure 5 is a vertical section through an EKG containing conditioning material and located within a substrate mass surrounded by one or more electrodes.
Figure 6 is a view of a wick drain form EKG containing substrate mass and associated with supply reservoirs along its length and evacuation reservoirs at its ends;
Figure 7 is a vertical section through a submarine trench, associated with electrodes for cable laying.

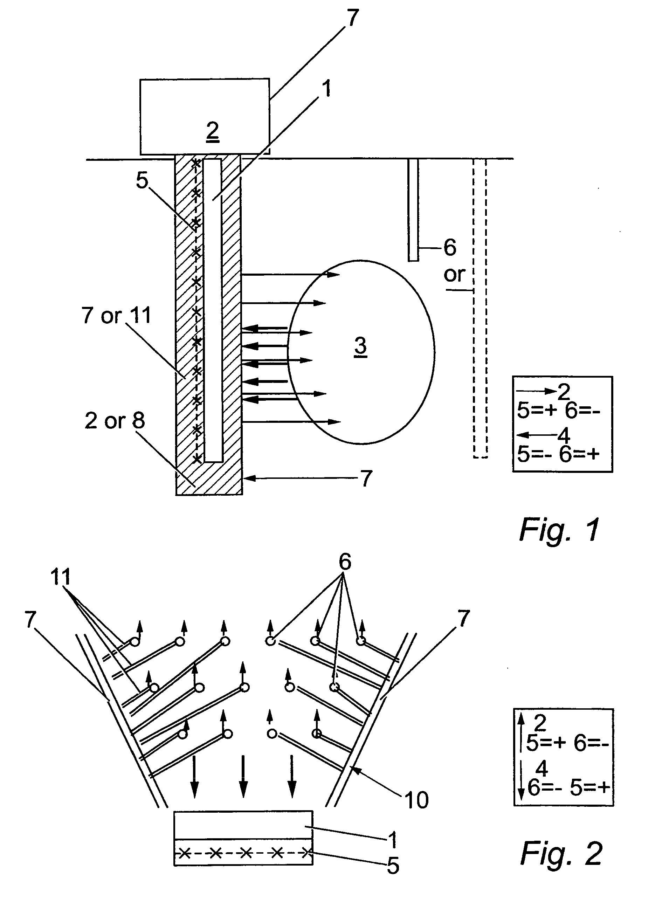

In Figure 1 the EKG structure is shown *in situ* acting as a cathode (5). Anode (6) may be another EKG or a conventional metal electrode. In a preferred configuration, electrode (6) and (5) may be reversed in polarity to serve as cathode and anode respectively, and in this case they are of approximately equivalent length. EKG structure (1) has been inserted into an excavation that serves as a natural supply reservoir (7) and is filled with decontaminant conditioning material (2) such as adsorbent or oxidant or the like. Alternatively the excavation is filled with an electrolyte (8) such as bentonite and serves as a supply system (11) in hydraulic contact with a temporary supply reservoir (7) of conditioning material (2). Conditioning material (2) flows or is transported towards the substrate mass (3) contacting the contaminant resulting in mobilisation or breaking down and mobilisation thereof. Once the contaminant has been fully mobilised, polarity of electrodes is reversed whereby contaminant is evacuated by reservoir (7) or supply system (11) acting as evacuation reservoir (batch wise process).

Figure 2 shows the concentration of contaminant towards EKG structure (1) by use of a plurality of electrodes (6) and impervious membrane (10) which converge towards the EKG structure (6) in the form of an EKG gate.

Electrodes (6) are associated with supply reservoirs for example comprised in impervious membrane (10) via supply system (11) and dispense conditioning material (2) in counter flow to the natural flow of contaminant (4), facilitating mobility and evacuation thereof via the EKG (1) to an evacuation reservoir (not shown).

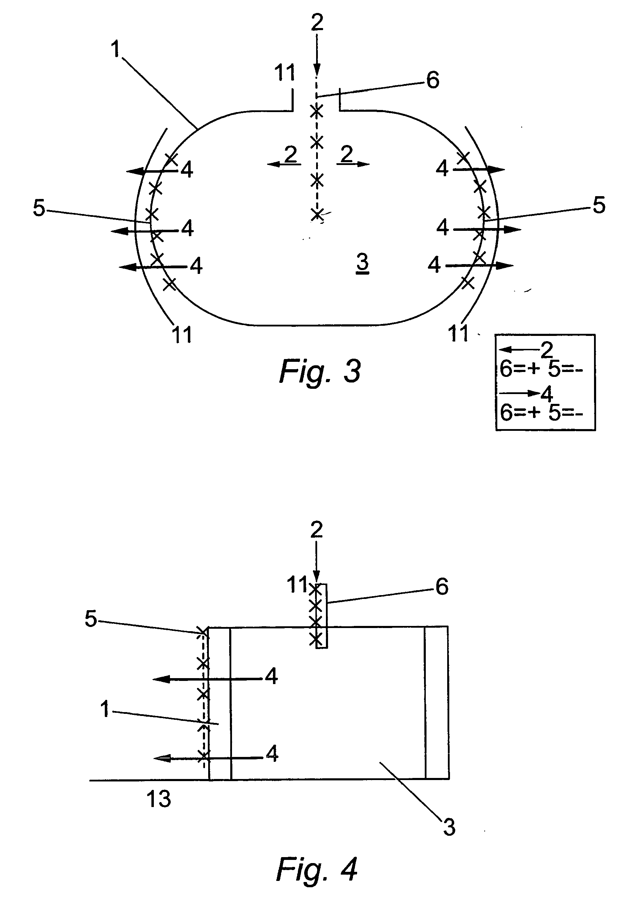

Figures 3 and 4 show an EKG geo bag and an EKG geo container, both of which can be used to reduce liquid content much faster than the conventional tube. An electric field between electrodes, one (6) inserted in the opening and one (5) comprised in EKG bag (1), transports conditioning material (2) such as thixotrope into the container or bag from a reservoir (not shown) via supply system (11) and transports material to be evacuated such as water (4) out of the container or geo tube through the porous sheath via an evacuation system (11). The fill (3) may be, for example, silt or clay or substrate.

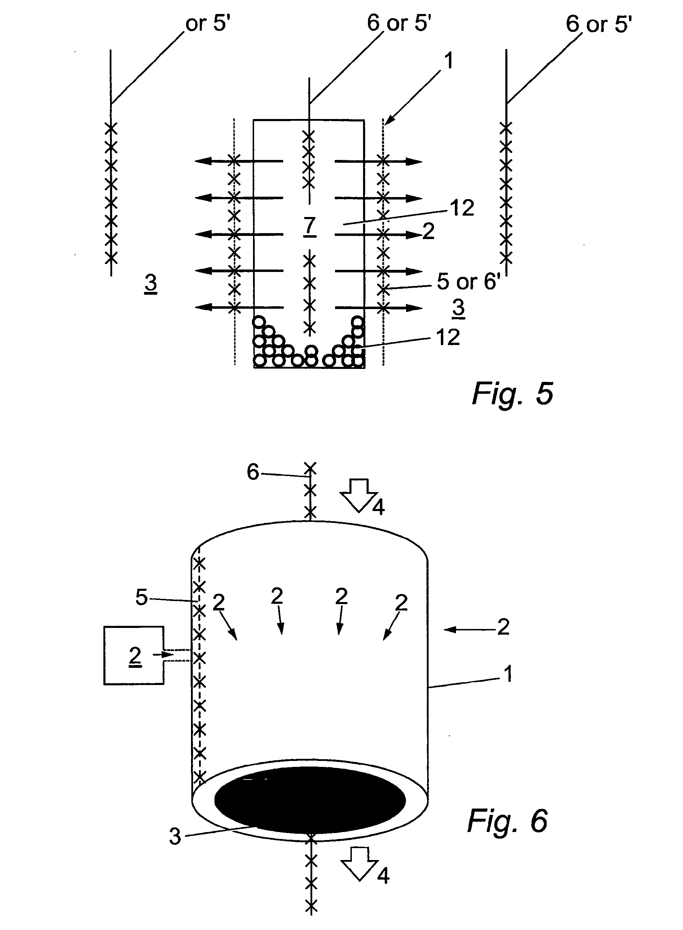

Figure 5 shows the use of the EKG structure with lime piles or soil nails. A lime pile (12) is a hole in the ground filled with lime. The lime pile is used for slope stabilisation and improvement of soft substrates for foundations.

One of the stabilising mechanisms of lime piles is the reaction of lime and the surrounding substrate. The reaction relies on the migration of the lime from the pile. In most substrates this does not influence more than about a 30 mm annular zone around the pile.

Another stabilising mechanism is the strength of the pile itself. In the short term, the realisation of this strength relies on lateral confinement; in the long term this strength is achieved through crystallisation of the lime in the pile.

The performance of lime piles and soil nails is improved using electro osmosis and the EKG structure of the invention, with subsequent carbonisation in the case of lime piles.

The lime or grout (12) is comprised in a supply reservoir (7) in the conductive EKG structure (1). Surrounding the pile with EKG allows electroosmosis to be introduced therefore potentially inducing the conditioning material in the form of calcium (2) to move further and more rapidly into the substrate mass (3). Polarity may be subsequently reversed for redistribution purposes. The EKG also provides lateral confinement. Thus its use improves the short-term strength of the pile and increases the size of the stabilised zone.

Carbonisation increases the effectiveness of the crystallisation in terms of speed and overall strength. It has a potential to improve the strength of the stabilised zone in addition to the pile.

Figure 6 shows a simple conductive EKG structure (1) in the form of a giant wick drain or sock, adapted to enclose substrate mass (3) contained in the geosynthetic core. The drain or sock is suitably vertically aligned such that substrate mass introduced (4) at an opening progresses vertically downwards and is removed at the other end. The outer surface of the drain or sock serves as cathode (5) and an electrode serving as anode (6) is introduced along the axial length of the drain or sock. Supply reservoir (not shown) enclosing the EKG or associated therewith by a suitable supply means allows introduction of conditioning material (2) through the EKG into the substrate mass allowing decontamination or conditioning in a linear continuous process, with progression of substrate mass along the axial direction of the EKG. Optional removal of take off or waste along the length of the EKG via evacuation reservoir or evacuation system (not shown) may be carried out. In this embodiment, polarity of electrodes may be reversed subsequent to conditioning, to evacuate decontaminant for example.

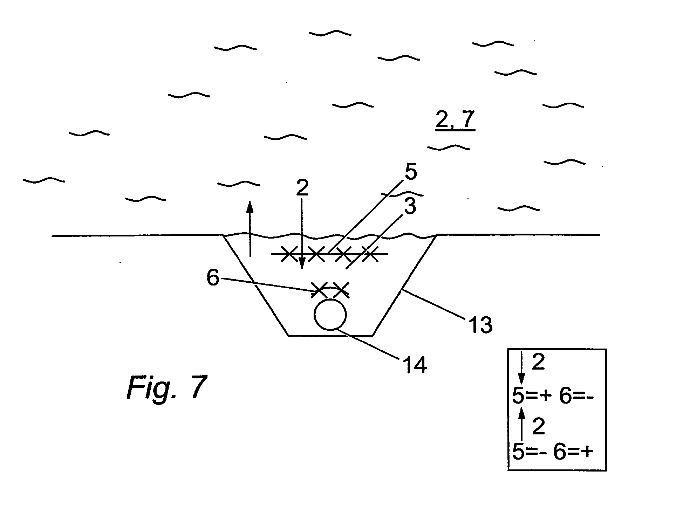

Figure 7 shows a trench which may be at the grounds surface or the sea bed for example, along the base of which a cable has been laid and material back filled. An EKG runs along the top of the trench, suitably submerged in the backfill, and serves as a first electrode, a second electrode being part of the cable, associated therewith or provided in a second layer there above. To secure the cable and prevent it floating to the surface the soil is first hardened by operating the upper EKG as anode (6). When it is subsequently desired to achieve the object for inspection, maintenance or the like the polarity may simply be reversed the upper EKG serving as cathode to cause movement of saline water into the back fill, using a suitable reservoir or the sea itself as supply reservoir. This avoids to the object which would result from chemical excavation.

### REFERENCE NUMERALS

- 1.: EKG Structure.
- 2.: Conditioning material.
- 3.: Substrate mass
- 4.: Evacuated material.
- 5.: Electrode.
- 6.: Electrode.
- 7.: Supply/Evacuation Reservoir
- 8.: Electrolyte.
- 9.:
- 10.: Impervious Membrane.
- 11.: Supply/Evacuation System
- 12.: Lime pile
- 13.: Trench
- 14.: Cable

## Claims

1. A method for conditioning a substrate mass (3) comprising the steps of: associating substrate mass with an electrokinetic geosynthetic structure (1) comprising geosynthetic material associated with a conducting element (5) and providing a further conducting element (6) located within the substrate mass, providing a primary reservoir (7) to form a first supply system (11) in hydraulic and electrical continuity with the electrokinetic geosynthetic structure, said electrokinetic geosynthetic structure being inserted in said primary reservoir or located laterally adjacent said first supply system, or said primary reservoir being comprised in said electrokinetic geosynthetic structure, associating a second supply system with said primary reservoir for supply of at least one conditioning material to be introduced into the substrate mass, and applying a potential difference between the conducting elements (5,6) which act as respective electrodes and thereby supply conditioning material to the substrate mass.

2. A method for conditioning a substrate mass as claimed in claim 1 wherein an evacuation system associated with one of the elements (5, 6) is provided for removal of at least one conditioning material or a waste material or by-product from the substrate mass.

3. A method for conditioning a substrate mass as claimed in claim 2 wherein the evacuation system is in hydraulic and electrical continuity with the electrokinetic geosynthetic structure and a reservoir (7).

4. A method for conditioning a substrate mass as claimed in any preceding claim wherein the supply system (11) is in hydraulic and electrical continuity with the electrokinetic geosynthetic structure and a reservoir (7).

5. A method as claimed in any preceding claim wherein the electrokinetic geosynthetic structure comprises a solid body having a central core which serves as the supply system and/or reservoir and optionally as the evacuation system and/or reservoir.

6. A method as claimed in any of the preceding claims comprising additionally reversing the polarity of the conducting elements during the method, or supplying conditioning material of different charge during the method.

7. A method as claimed in any of the preceding claims wherein the substrate is selected from soil, loam, earth, sod, clay, weak rock, gravel, stones, sewerage, sludge and mixtures thereof.

8. A method as claimed in any of the preceding claims wherein a conditioning material (2) is selected from water, aqueous media or solutions, salts, nutrients, supplementary carbon sources, supplementary oxygen sources, terminal electron acceptors, water retention materials, thickening materials, biomass, pH regulators, temperature regulators, minerals, reducing agents, oxidants, absorbents, metal particles, coated metal particles, non-metallic catalyst materials, grout, lime or mixtures thereof.

9. A method as claimed in any preceding claim wherein a conditioning material is a substrate mass softening material and the method comprises the further step of either burying or retrieving an object in/from the softened substrate mass.

10. A method as claimed in claim 9 wherein the softened substrate mass is returned to its former state after softening by reversing the potential difference between the conducting elements.

11. A method as claimed in any of clams 1 to 8 wherein the substrate mass comprises a structural foundation, a sports pitch, a leisure site or a field and wherein water is supplied to the substrate mass via the supply system and/or removed from the substrate mass via the evacuation system to thereby control the moisture content of the substrate mass.

12. A method as claimed in any of claims 2 to 11 wherein the substrate mass is soil, a conditioning material is a soil nutrient and the removed material is a soil contaminant, a by-product, excess water or a mixture thereof.

13. A method as claimed in any of claims 1 to 8 wherein a conditioning material is a decontaminant or contaminant absorbent.

14. A method as claimed in claim 13 wherein a second conditioning material is a contaminated material.

15. A method as claimed in either of claims 13 or 14 wherein the decontaminant/contaminant absorbent conditioning material comprises a bacteria.

16. A method as claimed in any of claims 1 to 8 wherein the conditioning material is a cohesion inducing material.

17. A method as claimed in any of claims 1 to 8 wherein the conditioning material comprises an electrolyte which serves to conduct a current between the elements to thereby kill contaminant bacteria in the substrate mass.

18. Substrate mass conditioning apparatus comprising: an electrokinetic geosynthetic structure (1) comprising geosynthetic material associated with a conducting element (5); a further conducting element (6); a primary reservoir (7) to form a first supply system (11) in hydraulic and electrical continuity with the electrokinetic geosynthetic structure, said electrokinetic geosynthetic structure being inserted in said primary reservoir or located laterally adjacent said first supply system (11), or said primary reservoir being comprised in said electrokinetic geosynthetic structure; a second supply system associated with said primary reservoir for supply of at least one conditioning material to be introduced into the substrate mass; and means for applying a potential difference between the conducting elements (5,6).

19. Apparatus as claimed in claim 18 comprising an evacuation system associated with one of the conducting elements for removal of at least one conditioning material or of a waste material or by-product from the substrate mass.

20. Apparatus as claimed in either of claims 18 or 19 wherein the supply system (11) and the optional evacuation system comprise respective reservoir(s) (7) in hydraulic and electrical continuity with the electrokinetic geosynthetic structure (1).

21. Apparatus as claimed in claim 20 wherein at least one of said reservoirs is comprised within the substrate mass

22. Apparatus as claimed in any of claims 18 to 21 wherein the supply and/or removal system comprises a pump.

23. Apparatus as claimed in any of claims 18 to 22 wherein one or more of said at least one further conducting element is a metallic non electrokinetic geosynthetic electrode.

24. Apparatus as claimed in any one of claims 18 to 23 wherein the electrokinetic geosynthetic structure comprises a solid body having a central core which serves as the supply system and/or reservoir and optionally as the evacuation system and/or reservoir.

25. Apparatus as claimed in any one of claims 18 to 24 wherein the electrokinetic geosynthetic structure comprises a pure or composite metallic or a conducting non-metallic.

26. Apparatus as claimed in any of claims 18 to 25 wherein the electrokinetic geosynthetic structure comprises one or more lines of spaced elongate conducting members.

27. Apparatus as claimed in any of claims 18 to 26 wherein the electrokinetic geosynthetic structure comprises a reinforcing element

28. Apparatus as claimed in claim 27 wherein the electrokinetic geosynthetic structure provides a longitudinal axis and the reinforcing element comprises at least one high strength elongate element running parallel to the longitudinal axis of the electrokinetic geosynthetic structure.

29. Apparatus as claimed in any of claims 18 to 28 wherein the electrokinetic geosynthetic structure comprises a non-conductive material with conductive material running through it at least partially on a surface of the structure.

30. Apparatus as claimed in any of claims 18 to 29 wherein the electrokinetic geosynthetic structure is in the form of a continuous elongate tube, tape or rope.

## Patentansprüche

1. Verfahren für die Konditionierung einer Substratmasse (3) weist folgende Schritte auf: Assoziieren von Substratmasse mit einer elektrokinetischen, geosynthetischen Struktur (1), die geosynthetisches Material verbunden mit einem leitenden Element (5) aufweist; und Bereitstellung eines weiteren leitenden Elements (6), welches in der Substratmasse positioniert ist; Bereitstellung eines primären Behälters (7), um einen ersten Anschlusssystem (11) für hydraulischen und elektrischen Anschluss an die elektrokinetische, geosynthetische Struktur auszubilden, wobei die elektrokinetische, geosynthetische Struktur in dem primären Behälter eingesetzt ist oder seitlich neben dem ersten Anschlusssystem positioniert ist, oder der primäre Behälter in der elektrokinetischen, geosynthetischen Struktur enthalten ist; Assozieren eines zweiten Anschlusssystems mit dem primären Behälter für die Einspeisung von mindestens einem Konditionierungsmaterial, das in die Substratmasse eingebracht werden soll, und Anlegung einer Spannungsdifferenz zwischen den leitenden Elementen (5,6) welche als zugehörige Elektroden fungieren and dabei Konditionierungsmaterial in die Substratmasse einbringen.

2. Verfahren für die Konditionierung einer Substratmasse nach Anspruch 1, wobei ein Entleerungssystem, das mit einem der Elemente (5,6) für die Abfuhr von mindestens einem Konditionierungsmaterial verbunden ist oder einem Abfallmaterial oder Nebenprodukt der Substratmasse bereitgestellt wird.

3. Verfahren für die Konditionierung einer Substratmasse nach Anspruch 2, wobeidas Entleerungssystem hydraulisch und elektrisch mit der elektrokinetischen, geosynthetischen Struktur und einem Behälter (7) verbunden ist.

4. Verfahren für die Konditionierung einer Substratmasse nach einem der vorangegangenen Ansprüche, wobei das Anschlusssystem (11) hydraulisch und elektrisch mit der elektrokinetischen, geosynthetischen Struktur und einem Behälter (7) verbunden ist.

5. Verfahren nach einem der vorangegangenen Ansprüche, wobei die elektrokinetische, geosynthetische Struktur einen massiven Körper aufweist, der einen zentralen Kern hat, der als Anschlusssystem und / oder Behälter und optional als Entleerungssystem und / oder Behälter fungiert.

6. Verfahren nach einem der vorangegangenen Ansprüche, das zusätzliche Polaritätsreversierung der leitenden Elemente während des Verfahrens, oder Zufuhr von Konditionierungsmaterial mit unterschiedlichen Ladungen während des Verfahrens aufweist.

7. Verfahren nach einem der vorangegangenen Ansprüche, wobei das Substrat aus Erde, Lehm, Erde, Rasen, Ton, Lockerstein, Kies, Steine, Abwasser, Schlamm und Mischungen daraus gewählt ist.

8. Verfahren nach einem der vorangegangenen Ansprüche, wobei ein Konditionierungsmaterial (2) gewählt ist als Wasser, wasserartiges Medium oder Lösung, Salz, Anschlusselektronenempfänger, wasserzurückhaltendes Material, Verdickungsmittel, Biomasse, PH-Regulatoren, Temperaturregulatoren, Mineralien, Reduktionsmittel, Oxidanten, Absorptionsmittel, Metallpartikel, beschichtete Metallpartikel, nichtmetallisches Katalysatormaterial, Mörtel, Kalk oder Mischungen daraus.

9. Verfahren nach einem der vorangegangenen Ansprüche, wobei ein Konditionierungsmaterial ein Substratmassenweichmacher ist und das Verfahren den weiteren Schritt von entweder Einerdung oder Zurückgewinnung eines Objektes in / von der weichen Substratsmasse aufweist.

10. Verfahren nach Anspruch 9, wobei die aufgewichte Substratmasse nach der Aufweichung mittels der Reversierung der Spannungsdifferenz zwischen den Leiterelementen in ihren ursprünglichen Zustand zurückgewandelt wird.

11. Verfahren nach einem der Ansprüche 1 bis 8, wobei die Substratmasse ein Strukturfundament, ein Fußballfeld, einen Erholungsort oder ein Feld aufweist und dass Wasser wird durch das Anschlusssystem in die Substratmasse eingeleitet und / oder durch das Entleerungssystem entfernt, um dabei den Feuchtegehalt der Substratmasse zu kontrollieren.

12. Verfahren nach einem der Ansprüche 2 bis 11, wobei die Substratmasse Erde ist, ein Konditionierungsmaterial Bauerde ist und das entfernte Material eine Erdverunreinigung, ein Nebenprodukt, Wasserüberschuss oder eine Mischung daraus ist.

13. Verfahren nach einem der Ansprüche 1 bis 8, wobei ein Konditionierungsmaterial ein Bereiniger oder Verunreinigungsabsorptionsmittel ist.

14. Verfahren nach Anspruch 13, wobei ein zweites Konditionierungsmaterial ein verunreinigtes Material ist.

15. Verfahren nach einem der Ansprüche 13 oder 14, wobei das Bereiniger- / Verunreinigungsabsorptions-Konditionierungsmaterial eine Bakterie aufweist.

16. Verfahren nach einem der Ansprüche 1 bis 8, wobei das Konditionierungsmaterial ein kohäsionsinduzierendes Material ist.

17. Verfahren nach einem der Ansprüche 1 bis 8, wobei das Konditionierungsmaterial ein Elektrolyt aufweist, der dazu dient einen Strom zwischen den Elementen zu leiten und somit die Verunreinigungsbakterie in der Substratmasse abzutöten.

18. Substratmassenkonditionierungsvorrichtung aufweisend: eine elektrokinetische geosynthetische Struktur (1), die geosynthetisches Material assoziiertn mit einem leitenden Element (5) aufweist; ein weiteres leitendes Element (6); einen primären Behälter (7), um ein erstes Anschlusssystem (11) für hydraulischen und elektrischen Anschluss an die elektrokinetische geosynthetische Struktur auszubilden, wobei die elektrokinetische geosynthetische Struktur in dem besagten primären Behälter eingesetzt ist oder seitlich positioniert ist neben dem ersten Anschlusssystem, oder der primäre Behälter in der besagten elektrokinetischen geosynthetischen Struktur enthalten ist; ein zweites Anschlusssystem mit dem primären Behälter für die Einspeisung von mindestens einem Konditionierungsmaterial, das in die Substratmasse eingebracht werden soll, und Mittel zur Anlegung einer Spannungsdifferenz zwischen den leitenden Elementen (5,6).

19. Vorrichtung nach Anspruch 18, da sein Entleerungssystem verbunden mit einem der leitenden Elemente für die Abfuhr von mindestens einem Konditionierungsmaterial oder einem Abfallmaterial oder Nebenprodukt der Substratmasse aufweist.

20. Vorrichtung nach einem der Ansprüche 18 oder 19, wobei das Anschlusssystem (11) und das optionale Entleerungssystem, zugehörige(n) Behälter (7), für hydraulischen und elektrischen Anschluss an die elektrokinetische, geosynthetische Struktur (1) aufweisen.

21. Vorrichtung nach Anspruch 20, wobei mindestens einer der besagten Behälter in der Substratmasse enthalten ist.

22. Vorrichtung nach einem der Ansprüche 18 bis 21, wobei das Anschlusssystem und / oder das Entleerungssystem eine Pumpe aufweisen / aufweist.

23. Vorrichtung nach einem der Ansprüche 18 bis 22, wobei ein oder mehrere mindestens ein weiteres leitendes Element, eine metallische, nichtelektrokinetisch-geosynthetische Elektrode ist.

24. Vorrichtung nach einem der Ansprüche 18 bis 23, wobei die elektrokinetische geosynthetische Struktur einen massiven Körper aufweist, der einen zentralen Kern hat, der als Anschlusssystem und / oder Behälter und optional als Entleerungssystem und / oder Behälter fungiert.

25. Vorrichtung nach einem der Ansprüche 18 bis 24, wobei die elektrokinetische geosynthetische Struktur reine oder verbundmetallische oder leitende nichtmetallische umfasst.

26. Vorrichtung nach einem der Ansprüche 18 bis 25, wobei die elektrokinetische geosynthetische Struktur eine oder mehrere Linie(n) von verteilten länglichen leitenden Elementen aufweist.

27. Vorrichtung nach einem der Ansprüche 18 bis 26, wobei die elektrokinetische geosynthetische Struktur ein Verstärkungselement aufweist.

28. Vorrichtung nach Anspruch 27, wobei die elektrokinetische geosynthetische Struktur eine Längsachse und ein Verstärkungselement vorsieht, das mindestens ein längliches, hochfestes Element parallel laufend zur Längsachse der elektrokinetischen geosynthetischen Struktur aufweist.

29. Vorrichtung nach einem der Ansprüche 18 bis 28, wobei die elektrokinetische geosynthetische Struktur ein nicht leitendes Material mit einem leitenden Material, das **dadurch** und mindestens teilweise auf der Strukturoberfläche verläuft, aufweist.

30. Vorrichtung nach einem der Ansprüche 18 bis 29, wobei die elektrokinetische geosynthetische Struktur ein kontinuierliches, längliches Rohr, Band oder Seil ausbildet.

## Revendications

1. Procédé de conditionnement d'un substrat (3) comprenant les étapes consistant à : associer un substrat à une structure géosynthétique électrocinétique (1) comprenant un matériau géosynthétique associé à un élément conducteur (5) et fournir un autre élément conducteur (6) placé dans le substrat, fournir un réservoir principal (7) pour former un premier système d'alimentation (11) dans une continuité hydraulique et électrique avec la structure géosynthétique électrocinétique, ladite structure géosynthétique électrocinétique étant insérée dans ledit réservoir principal ou placée de façon latérale adjacente au dit premier système d'alimentation, ou ledit réservoir principal étant composé dans ladite structure géosynthétique électrocinétique, associer un deuxième système d'alimentation au dit réservoir principal pour une alimentation d'au moins un matériau de conditionnement devant être introduit dans le substrat, et appliquer une différence de potentiel entre les éléments conducteurs (5, 6) qui agissent comme des électrodes respectives et fournissent de ce fait le matériau conducteur au substrat.

2. Procédé de conditionnement d'un substrat selon la revendication 1, dans lequel un système d'évacuation associé à un des éléments (5, 6) est prévu pour le retrait d'au moins un matériau de conditionnement ou d'un matériau résiduel ou d'un produit dérivé du substrat.

3. Procédé de conditionnement d'un substrat selon la revendication 2 dans lequel le système d'évacuation est en continuité hydraulique et électrique avec la structure géosynthétique électrocinétique et un réservoir (7).

4. Procédé de conditionnement d'un substrat selon l'une quelconque des revendications précédentes, dans lequel le système d'alimentation (11) est en continuité hydraulique et électrique avec la structure géosynthétique électrocinétique et un réservoir (7).

5. Procédé selon l'une quelconque des revendications précédentes, dans lequel la structure géosynthétique électrocinétique comprend un corps solide ayant un noyau central qui sert de système d'alimentation et/ou de réservoir et, en option, de système d'évacuation et/ou de réservoir.

6. Procédé selon l'une quelconque des revendications précédentes, comprenant en outre l'étape consistant à inverser la polarité des éléments conducteurs pendant le procédé, ou fournir un matériau de conditionnement de charge différente pendant le procédé.

7. Procédé selon l'une quelconque des revendications précédentes, dans lequel le substrat est sélectionné parmi le solum, la glaise, la terre, le gazon, l'argile, la roche molle, le gravier, les pierres, les effluents, la boue ou des mélanges de ceux-ci.

8. Procédé selon l'une quelconque des revendications précédentes dans lequel un matériau de conditionnement (2) est sélectionné parmi l'eau, des milieux ou solutions aqueux, des sels, des nutriments, des sources de carbone complémentaires, des sources d'oxygène complémentaires, des accepteurs d'électron terminal, des matériaux de rétention d'eau, des matériaux épaississants, une biomasse, des régulateurs de pH, des régulateurs de température, des minéraux, des agents réducteurs, des oxydants, des absorbants, des particules métalliques, des particules métalliques enrobées, des matériaux catalyseurs non métalliques, un enduit, la chaux ou des mélanges de ceux-ci.

9. Procédé selon l'une quelconque des revendications précédentes, dans lequel un matériau de conditionnement est un matériau de ramollissement de substrat et le procédé comprend l'étape supplémentaire consistant à enterrer ou extraire un objet dans le/du substrat ramolli.

10. Procédé selon la revendication 9, dans lequel le substrat ramolli est renvoyé à son premier état après ramollissement en inversant la différence de potentiel entre les éléments conducteurs.

11. Procédé selon l'une quelconque des revendications 1 à 8, dans lequel le substrat comprend une fondation structure, un terrain de sport, un site de loisir ou un champ dans lequel l'eau est fournie au substrat par l'intermédiaire du système d'alimentation et/ou retirée du substrat par l'intermédiaire du système d'évacuation pour de ce fait commander la teneur en humidité du substrat.

12. Procédé selon l'une quelconque des revendications 2 à 11, dans lequel le substrat est le sol, un matériau de conditionnement est un nutriment de sol, et le matériau retiré est un contaminant de sol, un produit dérivé, un excès d'eau ou un mélange de ceux-ci.

13. Procédé selon l'une quelconque des revendications 1 à 8, dans lequel un matériau de conditionnement est un décontaminant ou un absorbant de contaminant.

14. Procédé selon la revendication 13, dans lequel un deuxième matériau de conditionnement est un matériau contaminé.

15. Procédé selon l'une quelconque des revendications 13 ou 14, dans lequel le matériau de conditionnement de décontaminant/absorbant de contaminant comprend une bactérie.

16. Procédé selon l'une quelconque des revendications 1 à 8, dans lequel le matériau de conditionnement est un matériau d'induction de cohésion.

17. Procédé selon l'une quelconque des revendications 1 à 8, dans lequel le matériau de conditionnement comprend un électrolyte qui sert à conduire un courant entre les éléments pour de ce fait tuer les bactéries contaminantes dans le substrat.

18. Dispositif de conditionnement de substrat comprenant : une structure géosynthétique électrocinétique (1) comprenant un matériau géosynthétique associé à un élément conducteur (5) ; un autre élément conducteur (6) ; un réservoir principal (7) pour former un premier système d'alimentation (11) en continuité hydraulique et électrique avec la structure géosynthétique électrocinétique, ladite structure géosynthétique électrocinétique étant insérée dans ledit réservoir principal ou placée de façon latérale adjacente au dit premier système d'alimentation (11), ou ledit réservoir principal étant compris dans ladite structure géosynthétique électrocinétique ; un deuxième système d'alimentation associé au dit réservoir principal pour une alimentation d'au moins un matériau de conditionnement devant être introduit dans le substrat ; et des moyens destinés à appliquer une différence de potentiel entre les éléments conducteurs (5, 6).

19. Dispositif selon la revendication 18 comprenant un système d'évacuation associé à un des éléments conducteurs pour le retrait d'au moins un matériau de conditionnement ou d'un matériau résiduel ou un produit dérivé du substrat.

20. Dispositif selon l'une quelconque des revendications 18 ou 19 dans lequel le système d'alimentation (11) et le système d'évacuation optionnel comprennent des réservoirs respectifs (7) en continuité hydraulique et électrique avec la structure géosynthétique électrocinétique (1).

21. Dispositif selon la revendication 20 dans lequel au moins un desdits réservoirs est compris dans le substrat.

22. Dispositif selon l'une quelconque des revendications 18 à 21, dans lequel le système d'alimentation et/ou de retrait comprend une pompe.

23. Dispositif selon l'une quelconque des revendications 18 à 22 dans lequel un ou plusieurs desdits au moins un élément conducteur supplémentaire est une électrode métallique géosynthétique non électrocinétique.

24. Dispositif selon l'une quelconque des revendications 18 à 23, dans lequel la structure géosynthétique électrocinétique comprend un corps solide comprenant un noyau solide qui sert de système d'alimentation et/ou de réservoir et en option, de système d'évacuation et/ou de réservoir.

25. Dispositif selon l'une quelconque des revendications 18 à 24, dans lequel la structure géosynthétique électrocinétique comprend un métal pur ou composite ou un conducteur non métallique.

26. Dispositif selon l'une quelconque des revendications 18 à 25, dans lequel la structure géosynthétique électrocinétique comprend une ou plusieurs lignes d'éléments conducteurs allongés espacés.

27. Dispositif selon l'une quelconque des revendications 18 à 26, dans lequel la structure géosynthétique électrocinétique comprend un élément de renforcement.

28. Dispositif selon la revendication 27, dans lequel la structure géosynthétique électrocinétique fournit un axe longitudinal et l'élément de renforcement comprend au moins un élément allongé de haute résistance courant parallèlement à l'axe longitudinal de la structure géosynthétique électrocinétique.

29. Dispositif selon l'une quelconque des revendications 18 à 28, dans lequel la structure géosynthétique électrocinétique comprend un matériau non conducteur avec un matériau conducteur courant à travers celui-ci au moins partiellement sur une surface de la structure.

30. Dispositif selon l'une quelconque des revendications 18 à 29, dans lequel la structure géosynthétique électrocinétique est sous la forme d'un tube, d'une bande ou d'un tissu allongé continu.
